(19) **Europäisches Patentamt** / **European Patent Office** / **Office européen des brevets**

(11) **EP 4 518 191 A1**

(12) **EUROPEAN PATENT APPLICATION**
published in accordance with Art. 153(4) EPC

(43) Date of publication:
05.03.2025 Bulletin 2025/10

(21) Application number: 23814676.5

(22) Date of filing: 27.02.2023

(51) International Patent Classification (IPC):
*H04B 10/07* (2013.01)    *H01S 3/08* (2023.01)

(52) Cooperative Patent Classification (CPC):
G02B 6/42; H01S 3/08; H04B 10/07; H04B 10/079

(86) International application number:
PCT/CN2023/078492

(87) International publication number:
WO 2023/231477 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2022 CN 202210608273

(71) Applicant: Huawei Technologies Co., Ltd.
Shenzhen, Guangdong 518129 (CN)

(72) Inventors:
• YU, Fei
  Shenzhen, Guangdong 518129 (CN)
• LI, Yuetao
  Shenzhen, Guangdong 518129 (CN)
• GUO, Dan
  Shenzhen, Guangdong 518129 (CN)
• ZHAO, Junying
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **RESONANT CAVITY PACKAGING STRUCTURE, OPTICAL CHANNEL MONITORING MODULE, AND COMMUNICATION DEVICE**

(57) Embodiments of this application provide a resonant cavity packaging structure, an optical performance monitor, and a communication device. The resonant cavity packaging structure includes an optical fiber sub-assembly, a fastening structure, and a support member. The optical fiber sub-assembly and the support member are disposed oppositely at two ends of the fastening structure. A first cavity is provided in the fastening structure, an optical fiber is disposed in the optical fiber sub-assembly, the optical fiber sub-assembly penetrates into the fastening structure, and an optical fiber end face of the optical fiber is located in the first cavity. One end that is of the optical fiber sub-assembly and on which the optical fiber end face is disposed is a first end of the optical fiber sub-assembly, a second cavity is formed between the first end of the optical fiber sub-assembly and an inner wall that is of the first cavity and that is opposite to the first end of the optical fiber sub-assembly, and the second cavity is used to provide resonance space for an optical signal emitted from the optical fiber. A receiving apparatus is disposed in the support member, the receiving apparatus corresponds to the second cavity, and the receiving apparatus is configured to receive an optical signal emitted from the fastening structure through the second cavity. The resonant cavity packaging structure provided in embodiments of this application has a simple structure and a small volume, and this is conducive to miniaturization development of an optical sub-assembly.

FIG. 3A

## Description

This application claims priority to Chinese Patent Application No. 202210608273.9, filed with the China National Intellectual Property Administration on May 31, 2022, and entitled "RESONANT CAVITY PACKAGING STRUCTURE, OPTICAL PERFORMANCE MONITOR, AND COMMUNICATION DEVICE", which is incorporated herein by reference in its entirety.

## TECHNICAL FIELD

Embodiments of this application relate to the field of optical sub-assembly technologies, and in particular, to a resonant cavity packaging structure, an optical performance monitor, and a communication device.

## BACKGROUND

With development of a wavelength division multiplexing (Wavelength Division Multiple, WDM) network (referred to as a wavelength division network for short), wavelength division network devices are more widely used. In the wavelength division network device, an optical performance monitor (Optical performance monitor, OPM) needs to be added to a node like a light source, a reconfigurable optical add/drop multiplexer (Reconfigurable Optical Add Drop Multiplexer, ROADM), or an optical amplifier (Optical Amplifier, OA), to measure quality of an indicator like an optical power, a wavelength, or an optical signal noise ratio (Optical Signal Noise Ratio, OSNR) of a WDM optical signal, and the quality of the indicator is fed back to a system, to implement closed-loop monitoring.

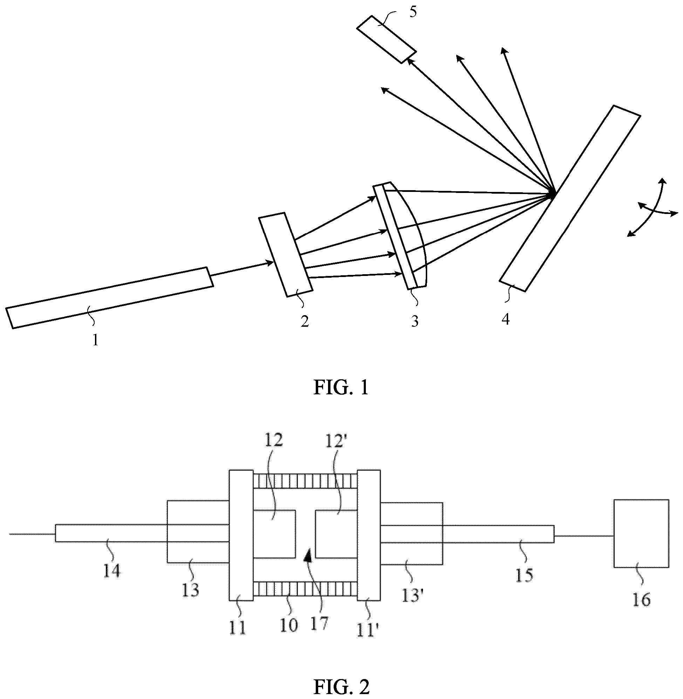

In a related technology, the OPM generally uses a micro-electro-mechanical system (Micro-Electro-Mechanical System, MEMS) rotating mirror solution. As shown in FIG. 1, in the MEMS rotating mirror solution, after the WDM optical signal is emitted from an optical fiber 1, light of different wavelengths is obtained by dispersing the WDM optical signal through a grating 2, and the light of different wavelengths reaches an MEMS rotating mirror 4 through a lens 3. An angle of the MEMS rotating mirror 4 is adjusted, so that light of a specific wavelength may be reflected to a receiving apparatus 5. In this way, the light of different wavelengths is monitored. However, a rotating angle range in the MEMS rotating mirror solution is limited, resulting in a limited range of WDM wavelengths that can be monitored. Therefore, a resonant cavity solution is proposed in the related technology. As shown in FIG. 2, in the resonant cavity solution, a resonant cavity includes a piezoelectric ceramic 10, two substrates 11 and 11', two glass plates 12 and 12', and two collimators 13 and 13'. The glass plate 12 and the collimator 13 are respectively disposed on two sides of the substrate 11, and the glass plate 12' and the collimator 13' are respectively disposed on two sides of the substrate 11'. A side on which the glass plate 12 is disposed and that is of the substrate 11 is opposite to a side on which the glass plate 12' is disposed and that is of the substrate 11', there is a gap between the glass plate 12 and the glass plate 12', and the piezoelectric ceramic 10 encloses between the substrate 11 and the substrate 11', to form a resonant cavity 17 between the substrate 11 and the substrate 11'. In use, the WDM optical signal enters the collimator 13 from an optical fiber 14, passes through the resonant cavity 17, then,, and the WDM optical signal is emitted into an optical fiber 15 from the collimator 13', and finally, is emitted into a receiving apparatus 16 through the optical fiber 15.

However, the resonant cavity in the foregoing resonant cavity solution has a complex structure and a large volume, and this is not conducive to miniaturization development of an optical sub-assembly.

## SUMMARY

Embodiments of this application provide a resonant cavity packaging structure, an optical performance monitor, and a communication device, where the resonant cavity packaging structure has a simple structure and a small volume, and this is conducive to miniaturization development of an optical sub-assembly.

A first aspect of embodiments of this application provides a resonant cavity packaging structure, where the resonant cavity packaging structure includes an optical fiber sub-assembly, a fastening structure, and a support member. The optical fiber sub-assembly and the support member are disposed oppositely at two ends of the fastening structure. A first cavity is disposed in the fastening structure, an optical fiber is disposed in the optical fiber sub-assembly, the optical fiber sub-assembly penetrates into the fastening structure, and an optical fiber end face of the optical fiber is located in the first cavity. One end that is of the optical fiber sub-assembly and on which the optical fiber end face is disposed is a first end of the optical fiber sub-assembly, a second cavity is formed between the first end of the optical fiber sub-assembly and an inner wall that is of the first cavity and that is opposite to the first end of the optical fiber sub-assembly, and the second cavity is configured to provide resonance space for an optical signal emitted from the optical fiber. A receiving apparatus is disposed in the support member, the receiving apparatus corresponds to the second cavity, and the receiving apparatus is configured to receive an optical signal emitted from the fastening structure through the second cavity.

According to the resonant cavity packaging structure provided in embodiments of this application, the fastening structure is disposed as a structure having the first cavity inside, so that space can be provided for disposing the optical fiber sub-assembly, and the resonance space is provided for the optical signal emitted from the optical fiber sub-assembly. The optical fiber sub-assembly directly penetrates into the fastening structure, and the optical fiber end face is disposed in the first cavity, so that the second cavity can be directly formed between the optical fiber end face and an inner wall of the fastening structure. The second cavity may be configured to provide the resonance space for the optical signal emitted from the optical fiber. In comparison with a related technology in which an optical signal emitted from an optical fiber first enters a glass plate through a collimator, and then enters a resonant cavity structure, the resonant cavity packaging structure in embodiments of this application has a simple structure and a small volume, and this is conducive to miniaturization development of an optical sub-assembly. In addition, the receiving apparatus is disposed in the support member, so that the optical signal emitted from the fastening structure can be received, and the optical signal emitted from the fastening structure can directly enter the receiving apparatus without passing through the collimator and the optical fiber. In comparison with the related technology in which an optical signal obtained through resonance needs to pass through a section of the optical fiber before entering the receiving apparatus, an insertion loss of the optical signal received by the resonant cavity packaging structure in embodiments of this application is smaller. In this way, an optical power of the optical signal received by the receiving apparatus can be increased. In addition, this can further reduce a size of the resonant cavity packaging structure and improve integration of the resonant cavity packaging structure.

In an optional implementation, a high reflection coating is disposed on an inner wall that is of the fastening structure and that is opposite to the optical fiber end face; an orthographic projection that is of the high reflection coating and that is in a center axis direction of the optical fiber covers at least the optical fiber end face; and the second cavity is formed between the first end of the optical fiber sub-assembly and the high reflection coating.

The high reflection coating is disposed on the inner wall that is of the fastening structure and that is opposite to the optical fiber end face. Because the high reflection coating has a high reflectivity, a reflectivity of the inner wall that is of the fastening structure and that is opposite to the optical fiber end face can be improved, that is, a reflectivity of a reflection wall of the second cavity is improved. Because the optical signal emitted from the optical fiber generates resonance in the second cavity, if the reflectivity of the reflection wall of the second cavity is higher, more optical signals of which wavelengths are close to a wavelength of an optical signal of a needed specific wavelength may be reflected to the second cavity, and oscillate in the second cavity, so that the optical signal of a specific wavelength that can be filtered out through the second cavity have higher fineness, that is, an error of the optical signal of a specific wavelength that is filtered out through the second cavity may be reduced.

In an optional implementation, a first lens is disposed on a surface that is of the fastening structure and that faces the support member; the first lens corresponds to the second cavity; the receiving apparatus is disposed opposite to a surface that is of the first lens and that is away from the fastening structure; and the first lens is configured to: couple the optical signal output from the fastening structure through the second cavity and then emit the coupled optical signal into the receiving apparatus.

The first lens is disposed, and then the first lens corresponds to the second cavity and is disposed opposite to the receiving apparatus. In this way, the optical signal of a specific wavelength emitted from the second cavity can enter the receiving apparatus after passing through the first lens, and the first lens may couple the optical signal of a specific wavelength emitted from the second cavity and then the optical signal enters the receiving apparatus. In this way, an insertion loss can be reduced, and an optical power of the optical signal entering the receiving apparatus can be increased.

In an optional implementation, an incident position is disposed on a surface that is of the receiving apparatus and that faces the first lens; and the optical signal coupled through the first lens is emitted into the receiving apparatus from the incident position.

In an optional implementation, there is a gap between the first lens and the receiving apparatus, and the gap is used to provide coupling space for the optical signal passing through the first lens.

The gap is disposed between the first lens and the receiving apparatus, so that the coupling space can be provided for the optical signal passing through the first lens. This improves the optical power of the optical signal entering the receiving apparatus.

In an optional implementation, a second lens is disposed on the optical fiber end face; the second cavity is formed between the second lens and the inner wall that is of the first cavity and that is opposite to the second lens; and the second lens is configured to couple the optical signal emitted from the optical fiber.

The second lens is disposed on the optical fiber end surface, so that the optical signal emitted from the optical fiber may be coupled and then enters the second cavity. In this way, the optical signal emitted from the optical fiber end face may be resonated in narrower space. In this way, tolerances of the first lens and the receiving apparatus can be increased without increasing widths of the first lens and the receiving apparatus. This can improve the optical power of the optical signal received by the receiving apparatus, and further improve efficiency of the resonant cavity packaging structure.

In an optional implementation, the second lens is a self-focusing lens.

In an optional implementation, the fastening structure includes a top wall, a bottom wall, and a telescopic structure; the top wall and the bottom wall are disposed opposite to each other, and the telescopic structure is enclosed between the top wall and the bottom wall, so that the first cavity is formed among the top wall, the bottom wall, and the telescopic structure; the optical fiber sub-assembly is disposed on the top wall or the bottom wall of the fastening structure; and the telescopic structure is configured to change a distance between the top wall and the bottom wall, so that lengths of the first cavity and the second cavity in a direction from the top wall to the bottom wall are variable.

The telescopic structure is disposed between the top wall and the bottom wall of the fastening structure, so that the distance between the top wall and the bottom wall of the fastening structure can be changed. Because both the first cavity and the second cavity are located between the top wall and the bottom wall of the fastening structure, the lengths of the first cavity and the second cavity in the direction from the top wall to the bottom wall can be changed by changing the length of the telescopic structure. In this way, the lengths of the first cavity and the second cavity may be changed, to change a wavelength of an optical signal filtered out by the resonant cavity packaging structure, so that the resonant cavity packaging structure can filter out optical signals of different specific wavelengths. This improves applicability of the resonant cavity packaging structure.

In an optional implementation, the telescopic structure is a piezoelectric ceramic; and a first electrical pin is disposed on the piezoelectric ceramic, and the first electrical pin is configured to be electrically connected to a control circuit.

The telescopic structure is disposed as a piezoelectric ceramic. Because the piezoelectric ceramic has good frequency stability, high frequency accuracy, and a wide applicable frequency range, and the piezoelectric ceramic is small in volume, does not absorb moisture, has a long service life, and has good anti-interference performance, stability and anti-interference performance of the resonant cavity packaging structure can be improved.

In an optional implementation, a material of the telescopic structure is a thermosensitive material; and a size of the thermosensitive material varies with a temperature.

In an optional implementation, there are a plurality of optical fiber sub-assemblies and a plurality of receiving apparatuses; one optical fiber sub-assembly corresponds to one receiving apparatus; the plurality of optical fiber sub-assemblies are disposed on a same side of the fastening structure at intervals, and an optical fiber end face of each optical fiber sub-assembly is located in the first cavity; and one second cavity is formed between a first end of each optical fiber sub-assembly and the inner wall that is of the first cavity and that is opposite to the first end of the optical fiber sub-assembly.

The plurality of optical fiber sub-assemblies and the plurality of the receiving apparatus are disposed, so that a plurality of second cavities may be disposed in the fastening structure. In this way, the resonant cavity packaging structure can simultaneously perform filtering on optical signals sent by the plurality of optical fiber sub-assemblies. This can improve the efficiency of the resonant cavity packaging structure.

In an optional implementation, at least one second electrical pin is disposed on an outer side of the support member; and each receiving apparatus corresponds to at least one second electrical pin, a part of second electrical pins is configured to be grounded, and a part of the second electrical pins is electrically connected to the receiving apparatus.

The receiving apparatus is disposed, so that the optical signal emitted from the second cavity may be converted into the electrical signal. The second electrical pin is disposed, so that the electrical signal of the receiving apparatus may be led out to an outer side of the resonant cavity packaging structure, to help connect to another component.

In an optional implementation, an internal line is disposed on the support member, and the internal line is configured to electrically connect the second electrical pin and the receiving apparatus.

The internal line is disposed, so that the receiving apparatus is electrically connected to the second electrical pin.

In an optional implementation, one end of the internal line is electrically connected to the second electrical pin, and the other end of the internal line is electrically connected to the receiving apparatus through a connecting line.

In an optional implementation, the connecting line is a metal line.

The connecting line is set as a metal line, so that conductivity between the receiving apparatus and the internal line can be improved. In addition, the metal line has good extensibility and good flexibility, so that connection stability between the receiving apparatus and the internal line can be ensured.

In an optional implementation, the second electrical pin is a flexible circuit board or a metal pin.

In an optional implementation, a material of the support member is ceramic.

The material of the support member is set to be ceramic, so that a service life of the resonant cavity packaging structure can be prolonged because the ceramic has high mechanical strength, good abrasive resistance, and good corrosion resistance.

In an optional implementation, the receiving apparatus is a photoelectric diode.

The receiving apparatus is disposed as a photoelectric diode, so that the receiving apparatus can convert the optical signal into the electrical signal.

In an optional implementation, at least one optical fiber is disposed in the optical fiber sub-assembly.

In an optional implementation, the optical fiber sub-assembly further includes a ferrule and an outer tube; the ferrule encloses an outer side of the optical fiber, the outer tube encloses an outer side of the ferrule, and both a first end of the ferrule and the optical fiber end face are located in the first cavity; and the outer tube is located on an outer side of the fastening structure, and is fixedly connected to the fastening structure.

The optical fiber sub-assembly is disposed as a structure including the ferrule and the outer tube. The ferrule may protect the optical fiber, enable the optical fiber to be fastened to the fastening structure through the ferrule, and enable the optical fiber end face to be located in the first cavity. The outer tube is disposed, to facilitate fastening of the optical fiber sub-assembly to one end of the fastening structure.

A second aspect of embodiments of this application provides an optical performance monitor, including at least the resonant cavity packaging structure according to any one of the first aspect or the possible implementations of the first aspect.

According to the optical performance monitor in embodiments of this application, the resonant cavity packaging structure according to the first aspect is disposed. Because the resonant cavity packaging structure has a simple structure and a small volume, a volume of the optical performance monitor can be greatly reduced, and this is conducive to miniaturization development of an optical sub-assembly.

A third aspect of embodiments of this application provides a communication device, including at least the optical performance monitor according to the second aspect, or including at least the resonant cavity packaging structure according to any one of the first aspect or the possible implementations of the first aspect.

In the communication device in embodiments of this application, the resonant cavity packaging structure according to the first aspect or the optical performance monitor according to the second aspect is disposed, so that the communication device can have a function of monitoring quality of an indicator like an optical power, a wavelength, or an optical signal noise ratio (Optical Signal Noise Ratio, OSNR) of an optical signal, a volume of the communication device can be further reduced, and integration of the communication device can be further improved. This is conducive to miniaturization development of the communication device.

**BRIEF DESCRIPTION OF DRAWINGS**

FIG. 1 is a diagram of a structure of an MEMS rotating mirror;
FIG. 2 is a diagram of a structure of a second cavity;
FIG. 3A is a diagram of a structure of a resonant cavity packaging structure according to an embodiment of this application;
FIG. 3B is a diagram of another structure of a resonant cavity packaging structure according to an embodiment of this application;
FIG. 4 is a diagram of light propagation in a resonant cavity;
FIG. 5 is a diagram of still another structure of a resonant cavity packaging structure according to an embodiment of this application;
FIG. 6 is a diagram of a frequency response of a light wave in a resonant cavity;
FIG. 7 is a diagram of yet another structure of a resonant cavity packaging structure according to an embodiment of this application;
FIG. 8 is a diagram of a frequency response of a light wave in a resonant cavity;
FIG. 9 is a diagram of still yet another structure of a resonant cavity packaging structure according to an embodiment of this application;
FIG. 10 is a diagram of light propagation of a self-focusing lens;
FIG. 11 is a diagram of a further structure of a resonant cavity packaging structure according to an embodiment of this application; and
FIG. 12 is a diagram of an application system of an optical performance monitor.

Reference numerals:

1, 14, 15, 231: optical fiber; 2: grating; 3: lens; 4: MEMS rotating mirror;
5, 16, 221: receiving apparatus; 10: piezoelectric ceramic; 11, 11': substrate; 12, 12': glass plate;
13, 13': collimator; 17, 240: second cavity;
200: resonant cavity packaging structure; 210: fastening structure; 211: top wall; 212: bottom wall;
213-first cavity; 214: telescopic structure; 2141: first electrical pin; 215: high reflection coating;
220: support member; 222: internal line; 223: second electrical pin; 224: connecting line;
225: first lens; 226: gap; 230: optical fiber sub-assembly; 2311: optical fiber end face;
232: ferrule; 233: outer tube; 234: second lens; 250: third cavity;
230a: first end of the optical fiber sub-assembly; and
227: solder ball.

**DESCRIPTION OF EMBODIMENTS**

Terms used in implementations of this application are only used to explain specific embodiments of this application, but are not intended to limit this application.

Unless otherwise specified in the context, in the entire specification and claims, a term "include (comprise)" and other forms of the term, for example, a third person singular form "includes (comprises)" and a present participle form "including (comprising)" are interpreted as "open and inclusive", that is, "include, but not limited to". In descriptions of the specification, terms such as "one embodiment (one embodiment)", "some embodiments (some embodiments)", "example embodiments (exemplary embodiments)", "example (example)", or "some examples (some examples)" are intended to indicate that specific features, structures, materials, or features related to embodiments or examples are included in at least one embodiment or example of the present disclosure. The foregoing schematic indications of the terms do not necessarily refer to a same embodiment or example. Further, the specific features, the structures, the materials, or the features may be included in any one or more embodiments or examples in any appropriate manner.

In addition, in this application, position terms such as "front" and "back" are defined relative to illustrative positions of components in accompanying drawings. It should be understood that these direction terms are relative concepts and are used for descriptions and clarification of "relative to", and may vary based on changes of the positions of the components in the accompanying drawings.

Term "and/or" in embodiments of this application describes only an association relationship for describing associated objects and indicates that three relationships may exist. For example, A and/or B may indicate the following three cases: Only A exists, both A and B exist, and only B exists. In addition, a character "/" in this specification generally indicates an "or" relationship between the associated objects.

With development of a wavelength division multiplexing network, wavelength division network devices are increasingly widely used. In the wavelength division network device, an optical performance monitor usually needs to be disposed, to monitor quality of an indicator like an optical power, a wavelength, or an optical signal noise ratio of a wavelength division multiplexing optical signal, and the quality of the indicator is fed back to a system, to implement closed-loop monitoring.

In a related technology, a micro-electro-mechanical system (Micro-Electro-Mechanical System, MEMS) rotating mirror solution is generally used. However, a rotating angle range in the MEMS rotating mirror solution is limited, resulting in a limited WDM wavelength range that can be monitored. Therefore, a resonant cavity solution is proposed in the related technology. However, a resonant cavity in the related technology has a problem of a complex structure and a large volume, and this is not conducive to miniaturization development of an optical sub-assembly.

To resolve the problem of a complex structure and a large volume of the resonant cavity, embodiments of this application provide a resonant cavity packaging structure with a simple structure and a small volume, an optical performance monitor, and a communication device.

The following describes in detail a specific structure of the resonant cavity packaging structure in embodiments of this application.

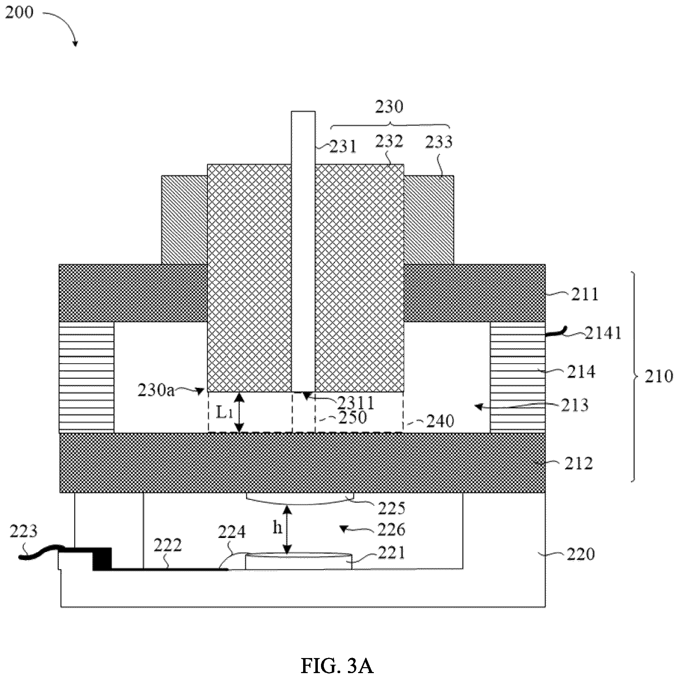

FIG. 3A is a diagram of a structure of a resonant cavity packaging structure 200 according to an embodiment of this application. As shown in FIG. 3A, an embodiment of this application provides a resonant cavity packaging structure 200. The resonant cavity packaging structure 200 may include an optical fiber sub-assembly 230, a fastening structure 210, and a support member 220. The optical fiber sub-assembly 230 and the support member 220 are disposed oppositely at two ends of the fastening structure 210. A first cavity 213 is disposed in the fastening structure 210, the optical fiber sub-assembly 230 penetrates into the fastening structure 210, a first end 230a of the optical fiber sub-assembly 230 is located in the first cavity 213, and a second cavity 240 is formed between the first end 230a of the optical fiber sub-assembly 230 and an inner wall that is of the first cavity 213 and that is opposite to the first end 230a of the optical fiber sub-assembly 230. A receiving apparatus 221 is disposed in the support member 220, the receiving apparatus 221 corresponds to the optical fiber sub-assembly 230, and the receiving apparatus 221 is configured to receive an optical signal emitted from the inside of the fastening structure 210.

For example, the optical fiber sub-assembly 230 may include an optical fiber 231, a ferrule 232, and an outer tube 233, where the ferrule 232 encloses an outer side of the optical fiber 231, the outer tube 233 encloses an outer side of the ferrule 232, and both a first end of the ferrule 232 and an optical fiber end face 2311 of the optical fiber 231 are located at the first end 230a of the optical fiber sub-assembly 230, and are located in the first cavity 213. The outer tube 233 is located on an outer side of the fastening structure 210, and is fixedly connected to the fastening structure 210.

A quantity of optical fibers 231 in the optical fiber sub-assembly 230 includes but is not limited to one shown in the figure. There is at least one optical fiber 231 in the optical fiber sub-assembly 230, and each optical fiber 231 may be packaged in a plastic sleeve (not shown in the figure), so that the optical fiber 231 can be bent without being broken. A plurality of optical fibers 231 may be disposed in the optical fiber sub-assembly 230 in a form of an optical fiber bundle (that is, a plurality of optical fibers form a bundle of optical fibers); or may be disposed in the optical fiber sub-assembly 230 in a form of an optical fiber ribbon (that is, a plurality of optical fibers are arranged in parallel); or certainly, may be disposed in the optical fiber sub-assembly 230 in a form of an optical fiber array (Fiber Array, FA). An arrangement form of the optical fiber in the optical fiber sub-assembly 230 is not specifically limited in embodiments, provided that the optical fiber 231 is disposed. In addition, the optical fiber 231 may be a multi-mode optical fiber or a single-mode optical fiber. A type of the optical fiber is not specifically limited in embodiments of this application.

The optical fiber 231 may be fixedly connected to the ferrule 232 in a manner of bonding or welding, the ferrule 232 may be fixedly connected to the outer tube 233 in a manner of bonding or welding, the ferrule 232 may be fixedly connected to the fastening structure 210 in a manner of bonding or welding, and the outer tube 233 may be fixedly connected to the fastening structure 210 in a manner of bonding, welding, or the like. Connection manners between the optical fiber 231 and the ferrule 232, between the ferrule 232 and the outer tube 233, between the ferrule 232 and the fastening structure 210, and between the outer tube 233 and the fastening structure 210 are not specifically limited in embodiments.

For example, the ferrule 232 in the optical fiber sub-assembly 230 may be a ceramic ferrule 232, and the ceramic ferrule 232 may fasten the optical fiber 231, so that the optical fiber end face 2311 may directly extend into the first cavity 213. Compared with the resonant cavity in FIG. 2, the resonant cavity packaging structure 200 in this embodiment may not need the collimator 13 and the glass plate 12, so that a volume of the resonant cavity packaging structure 200 can be greatly reduced. In addition, the ceramic ferrule 232 may further ensure communication quality of the optical fiber 231.

For example, the outer tube 233 in the optical fiber sub-assembly 230 may be a glass tube, and the glass tube has a good thermal stability and is not likely to deform. Therefore, it can be ensured that the resonant cavity packaging structure 200 is not likely to deform in use, to further prolong a service life of the resonant cavity packaging structure 200.

In this embodiment, the first end 230a of the optical fiber sub-assembly 230 and an inner wall that is of the fastening structure 210 and that is opposite to the first end 230a of the optical fiber sub-assembly 230 are parallel to each other, the first end 230a of the optical fiber sub-assembly 230 may be a plane or a curved surface, and the first end 230a of the optical fiber sub-assembly 230 has a high reflectivity. The inner wall that is of the fastening structure 210 and that is opposite to the first end 230a of the optical fiber sub-assembly 230 may be a plane or a curved surface, and the inner wall that is of the fastening structure 210 and that is opposite to the first end 230a of the optical fiber sub-assembly 230 has a high reflectivity and has a specific transmittance.

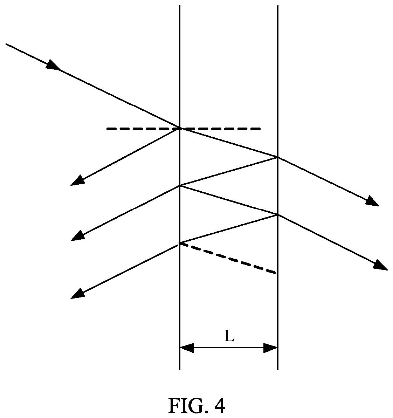

As shown in FIG. 4, a resonant cavity may be formed between two parallel lenses. After the optical signal passes through the resonant cavity, a part of the optical signal may be emitted from the resonant cavity, and a part of the optical signal oscillates in the resonant cavity. Therefore, an optical signal may be filtered out by using the resonant cavity. For example, an optical signal of which wavelength is an integer multiple of a cavity length L of the resonant cavity may be filtered out.

In this embodiment, the resonant cavity may be formed between the first end 230a of the optical fiber sub-assembly 230 and the inner wall that is of the fastening structure 210 and that is opposite to the first end 230a of the optical fiber sub-assembly 230, that is, the second cavity 240 may be used as the resonant cavity, that is, the second cavity 240 may provide resonance space for the optical signal entering the second cavity 240.

For ease of description, in this embodiment, one end that is of the second cavity 240 and that is close to the optical fiber sub-assembly 230 is used as an input end of the second cavity 240, one end that is of the second cavity 240 and that is close to the fastening structure 210 is used as an output end of the second cavity 240, and a distance between a top wall 211 and a bottom wall 212 of the fastening structure 210 is used as a height direction of the resonant cavity packaging structure 200. The input end and the output end of the second cavity 240 each have a reflection function, and the output end of the second cavity 240 further has a transmission function, so that an optical signal of a specific wavelength is output after the optical signal oscillates in the second cavity 240.

When optical signals are input into the optical fiber 231 in the optical fiber sub-assembly 230, the optical signals may be emitted into the second cavity 240 from the optical fiber end face 2311, and after oscillation is generated between two end faces of the second cavity 240, optical signals that are of a specific wavelength and of which propagation directions, frequencies and phases are the same are obtained, and then are emitted from a side that is of the fastening structure 210 and that is opposite to the first end 230a of the optical fiber sub-assembly 230, that is, the optical signals of a specific wavelength may be obtained after the optical signals of the optical fiber sub-assembly 230 pass through the second cavity 240. The optical signal of a specific wavelength enters the receiving apparatus 221, and the receiving apparatus 221 may convert the received optical signal of a specific wavelength into an electrical signal.

It should be noted that, when the optical signal oscillates in the second cavity 240, the resonance space of the optical signal may occupy the entire second cavity 240, or may occupy only a part of the second cavity 240. For example, the optical signal oscillates only in a part that is of the cavity and that is formed between the optical fiber end face 2311 and the inner wall that is of the fastening structure 210 and that is opposite to the optical fiber end face 2311. Therefore, the second cavity 240 may be used as a resonant cavity of the resonant cavity packaging structure 200, and a third cavity 250 formed between the optical fiber end face 2311 and the inner wall that is of the fastening structure 210 and that is opposite to the optical fiber end face 2311 may also be used as a resonant cavity. Because light may shift in a reflection, refraction, or diffraction process, a specific range of the resonant cavity is not specifically limited in embodiments of this application, provided that the optical signal may oscillate in the second cavity 240, and the optical signal of a specific wavelength may be output from the output end of the second cavity 240.

Still as shown in FIG. 3A, in this embodiment, the fastening structure 210 may include the top wall 211, the bottom wall 212, and a telescopic structure 214. The top wall 211 and the bottom wall 212 are disposed opposite to each other, the telescopic structure 214 is enclosed between the top wall 211 and the bottom wall 212, one end of the telescopic structure 214 is fixedly connected to the top wall 211, and the other end of the telescopic structure 214 is fixedly connected to the bottom wall 212, so that the first cavity 213 is formed among the top wall 211, the bottom wall 212, and the telescopic structure 214. A connection manner between the telescopic structure 214 and each of the top wall 211 and the bottom wall 212 may be a bonding manner, a welding manner, a riveting manner, a fastener connection manner, or the like. In this embodiment, a fastening manner between the telescopic structure 214 and each of the top wall 211 and the bottom wall 212 is not specifically limited.

In some embodiments, a through hole (not shown in the figure) may be provided on the top wall 211 of the fastening structure 210, the first end 230a of the optical fiber sub-assembly 230 penetrates into the through hole of the top wall 211, and the outer tube 233 of the optical fiber sub-assembly 230 is fastened to the outer side of the top wall 211, so that the first end 230a of the optical fiber sub-assembly 230 may be located in the first cavity 213. The support member 220 is disposed on an outer side of the bottom wall 212 of the fastening structure 210, the receiving apparatus 221 is disposed in the support member 220, the receiving apparatus 221 corresponds to the optical fiber sub-assembly 230, and the receiving apparatus 221 is configured to receive the optical signal emitted from the bottom wall 212 of the fastening structure 210.

Certainly, in some other embodiments, a through hole may also be provided on the bottom wall 212 of the fastening structure 210, the first end 230a of the optical fiber sub-assembly 230 penetrates into the through hole of the bottom wall 212, and the outer tube 233 of the optical fiber sub-assembly 230 is fastened to an outer side of the bottom wall 212, so that the first end 230a of the optical fiber sub-assembly 230 may be located in the first cavity 213. The support member 220 is disposed on the outer side of the top wall 211 of the fastening structure 210, the receiving apparatus 221 is disposed in the support member 220, the receiving apparatus 221 corresponds to the optical fiber sub-assembly 230, and the receiving apparatus 221 is configured to receive the optical signal emitted from the top wall 211 of the fastening structure 210.

The following uses an example in which the optical fiber sub-assembly 230 is disposed on the top wall 211 and the support member 220 is disposed on the bottom wall 212 for description.

In this embodiment, the first end 230a of the optical fiber sub-assembly 230 may extend out of the top wall 211 for a distance (as shown in a position shown in FIG. 3A). Certainly, the first end 230a of the optical fiber sub-assembly 230 may alternatively be flush with a surface that is of the top wall 211 and that faces the first cavity 213. In this case, when orthographic projections that are in a center axis direction of the optical fiber 231 and that are of the first end 230a of the optical fiber sub-assembly 230 and the bottom wall 212 overlap, the first cavity 213 is the second cavity 240. In addition, the first end 230a of the optical fiber sub-assembly 230 may alternatively be located in an aperture of the through hole. Therefore, a position of the first end 230a of the optical fiber sub-assembly 230 may be specifically set based on a specific requirement, and the position of the first end 230a of the optical fiber sub-assembly 230 is not specifically limited in embodiments.

Certainly, different positions of the first end 230a of the optical fiber sub-assembly 230 may result in different distances between the top wall 211 and the bottom wall 212 of the fastening structure 210, result in different volumes of the fastening structure 210, and further result in different volumes of the resonant cavity packaging structure 200. In other words, the volume of the resonant cavity packaging structure 200 may be changed by disposing the first end 230a of the optical fiber sub-assembly 230 at different positions. Therefore, a disposing position of the first end 230a of the optical fiber sub-assembly 230 is not specifically limited in embodiments of this application, provided that the optical fiber end face 2311 may be located in the first cavity 213.

In some embodiments, the top wall 211 and the bottom wall 212 of the fastening structure 210 may be glass plate structures. The glass plate structure has a high reflectivity and a specific transmittance, so that a requirement of the resonant cavity can be met. In addition, the glass plate structure is stable and is not likely to deform, so that a service life of the resonant cavity packaging structure 200 can be effectively prolonged. The top wall 211 and the bottom wall 212 may be glass plates with a small expansion coefficient or zero expansion glass plates. In this way, it can be ensured that a structure of the fastening structure 210 is more stable, and the service life of the resonant cavity packaging structure 200 is further prolonged.

Still as shown in FIG. 3A, the support member 220 is disposed on the outer side of the bottom wall 212 of the fastening structure 210, and the receiving apparatus 221 is disposed at an end that is in the support member 220 and that is opposite to the bottom wall 212 of the fastening structure 210. The receiving apparatus 221 corresponds to the first end 230a of the optical fiber sub-assembly 230, and an orthographic projection that is of the optical fiber end face 2311 and that is in a direction from the top wall 211 to the bottom wall 212 is located on the receiving apparatus 221. The receiving apparatus 221 is configured to: receive the optical signal emitted from the bottom wall 212 of the fastening structure 210 through the second cavity 240, and convert the optical signal into an electrical signal. For example, the receiving apparatus 221 may be a photoelectric diode.

In this embodiment, the receiving apparatus 221 is disposed in the support member 220, so that the optical signal emitted from the fastening structure 210 can be received, and the optical signal emitted from the fastening structure can directly enter the receiving apparatus without passing through a collimator and an optical fiber. In comparison with a related technology in which an optical signal obtained through resonance needs to pass through a section of an optical fiber before entering the receiving apparatus, an insertion loss of the optical signal received by the resonant cavity packaging structure 200 in embodiments of this application is smaller. In this way, an optical power of the optical signal received by the receiving apparatus 221 can be increased. In addition, this can further reduce a size of the resonant cavity packaging structure 200 and improve integration of the resonant cavity packaging structure 200.

At least one second electrical pin 223 is disposed on an outer side of the support member 220. One receiving apparatus 221 corresponds to the at least one second electrical pin 223, a part of the second electrical pins 223 is configured to be grounded, and a part of the second electrical pins 223 is electrically connected to the receiving apparatus 221. When there are a plurality of receiving apparatuses 221, the plurality of receiving apparatuses 221 may share one second electrical pin 223, or one grounded second electrical pin 223 may be disposed to each receiving apparatus 221. A quantity of second electrical pins 223 is not specifically limited in embodiments.

The receiving apparatus 221 is disposed, so that the optical signal emitted from the second cavity 240 may be converted into the electrical signal. The second electrical pin 223 is disposed, so that the electrical signal of the receiving apparatus 221 may be led out to an outer side of the resonant cavity packaging structure 200, to help connect to another component.

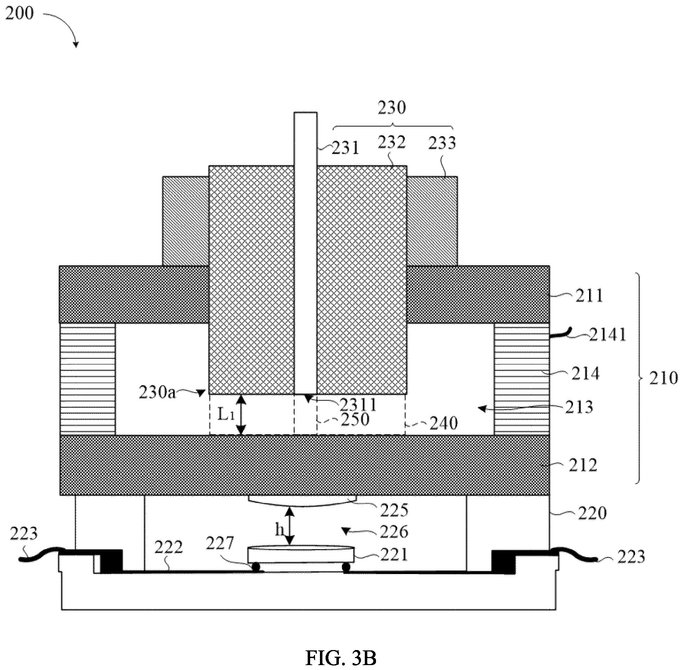

For example, an internal line 222 is disposed on the support member 220, and the internal line 222 is configured to electrically connect the second electrical pin 223 and the receiving apparatus 221. One end of the internal line 222 is electrically connected to the second electrical pin 223, and the other end of the internal line 222 is electrically connected to the receiving apparatus 221 through a connecting line 224. The connecting line 224 is a metal line. Certainly, in some other embodiments, as shown in FIG. 3B, the receiving apparatus 221 and the internal line 222 may alternatively be welded and connected through a solder ball 227 in a flip chip (Flip chip) manner, where the solder ball 227 may be a tin ball, a metal ball, or the like, provided that the solder ball is conductive and is convenient for welding. In this way, the connecting line 224 does not need to be disposed, so that a part of lines can be saved, and costs can be reduced. In addition, a structure of the support member can be simpler. A connection manner between the receiving apparatus 221 and the internal line 222 is not specifically limited in embodiments of this application.

The internal line 222 is disposed, so that the receiving apparatus 221 is electrically connected to the second electrical pin 223. The connecting line 224 is disposed as a metal line, so that conductivity between the receiving apparatus 221 and the internal line 222 can be improved. In addition, the metal line has good scalability and flexibility, so that connection stability between the receiving apparatus 221 and the internal line 222 can be ensured. For example, the second electrical pin 223 may be a flexible circuit board, a metal pin, or the like, and the second electrical pin 223 may be fixedly connected to the support member 220 in a manner of welding or the like. The support member 220 may be fixedly connected to the fastening structure 210 in a manner of bonding, welding, or the like. A connection manner between the support member 220 and the fastening structure 210 is not specifically limited in embodiments of this application.

In an optional implementation, a material of the support member 220 may be ceramic. The material of the support member 220 is set to be ceramic, so that the service life of the resonant cavity packaging structure 200 can be prolonged because the ceramic has high mechanical strength, good abrasive resistance, and good corrosion resistance. Certainly, in some other embodiments, the material of the support member 220 may alternatively be a metal material.

In an optional implementation, a first lens 225 may be further disposed on a surface that is of the bottom wall 212 of the fastening structure 210 and that is close to the support member 220. The first lens 225 corresponds to the second cavity 240. The receiving apparatus 221 is disposed opposite to a surface that is of the first lens 225 and that is away from the fastening structure 210. The first lens 225 is configured to: couple the optical signal output from the fastening structure 210 through the second cavity 240, and then emit the optical signal into the receiving apparatus 221.

For example, an incident position is disposed on a surface that is of the receiving apparatus 221 and that faces the first lens 225. The optical signal obtained through coupling by the first lens 225 is emitted into the receiving apparatus 221 at the incident position. There is a gap 226 between the first lens 225 and the receiving apparatus 221. A height of the gap may be h, and the gap 226 is used to provide coupling space for the optical signal passing through the first lens 225.

The first lens 225 is disposed, and the first lens 225 corresponds to the second cavity 240 and is disposed opposite to the receiving apparatus 221. In this way, the optical signal of a specific wavelength emitted through the second cavity 240 can pass through the first lens 225 and then enter the receiving apparatus 221. The first lens 225 is configured to couple the optical signal of a specific wavelength emitted from the second cavity 240 and then the optical signal enters the receiving apparatus 221. In this way, an insertion loss can be reduced, and the optical power of the optical signal entering the receiving apparatus 221 can be increased. The gap 226h is disposed between the first lens 225 and the receiving apparatus 221, so that the coupling space can be provided for the optical signal passing through the first lens 225. This improves the optical power of the optical signal entering the receiving apparatus 221.

The first lens 225 may be a common lens, and the first lens 225 may be fastened to the bottom wall 212 of the fastening structure 210 in a manner of bonding, integral forming, or the like.

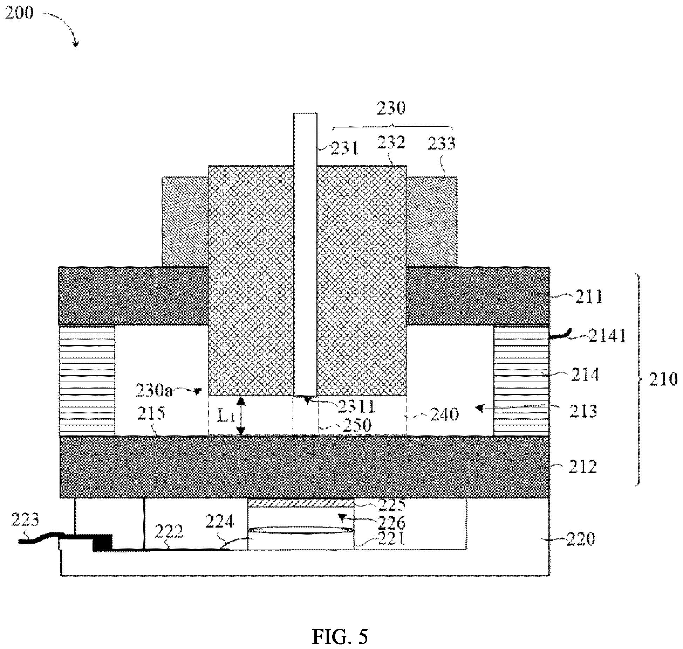

Certainly, in some embodiments, as shown in FIG. 5, the first lens 225 may alternatively be disposed on the receiving apparatus 221. In other words, the receiving apparatus 221 comes with the first lens 225. There is the gap 226 between the first lens 225 and the receiving apparatus 221, and the gap 226 is used to provide the coupling space for the optical signal passing through the first lens 225. The first lens 225 may be disposed on the receiving apparatus 221 in a manner of welding, bonding, or the like. Certainly, the first lens 225 may alternatively be fastened to the receiving apparatus 221 by disposing another connecting member. A connection manner between the first lens 225 and the receiving apparatus 221 is not specifically limited in embodiments. In addition, the first lens 225 and the bottom wall 212 of the fastening structure 210 may be in gap cooperation or contact connection. A cooperation relationship between the first lens 225 and the bottom wall 212 of the fastening structure 210 is not specifically limited in embodiments.

The first lens 225 is directly disposed on the receiving apparatus 221, so that the structure of the fastening structure 210 can be simplified. In addition, during assembly, the first lens 225 does not need to be assembled with the bottom wall 212 of the fastening structure 210, and only needs to be mounted together with the receiving apparatus 221 in the support member 220. In this way, assembly time can be reduced, and production efficiency can be improved.

In addition, a trans-impedance amplifier (Trans-impedance Amplifier, TIA) may be further disposed in the support member 220. The receiving apparatus 221 may be electrically connected to the TIA, and the TIA may be electrically connected to the internal line 222. The trans-impedance amplifier is disposed in the support member 220, so that the electrical signal converted by the receiving apparatus 221 may be amplified, and then an amplified signal enters the internal line 222 of the support member 220 and then be led out through the second electrical pin 223.

Certainly, in some other embodiments, another component may be further disposed in the support member 220, so that the receiving apparatus 221, the internal line 222, and the second electrical pin 223 are better connected. This is not specifically limited in embodiments of this application.

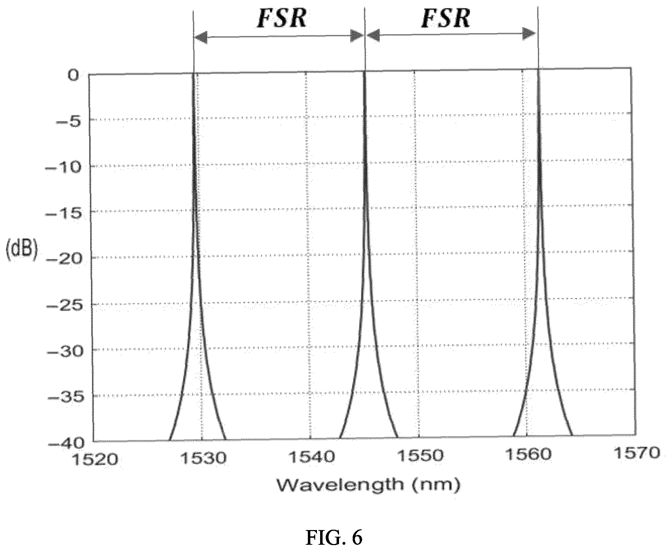

It should be noted that, as shown in FIG. 6, a range between two adjacent resonant frequencies of the resonant cavity, namely, a free spectral range (Free Spectral Range, FSR), may be calculated according to the following formula.

To be specific, FSR=C/2nL, where C is a light velocity in a vacuum; n is an intermediate medium refractive index, and if the intermediate medium is air, n is approximately 1; and L is a distance between two end faces of the resonant cavity, namely, a cavity length of the resonant cavity.

It can be known from the foregoing formula that, that is, it can be known from the FSR formula that the cavity length L or the medium refractive index of the resonant cavity is adjusted, so that the range between two adjacent resonant frequencies can be changed, that is, a position of an interference peak is changed, and further a function of a tunable filter is implemented.

Because a medium in the first cavity 213 is not likely to change after being disposed, the position of the interference peak may be changed by changing the cavity length L of the resonant cavity, to implement the function of the tunable filter.

In this embodiment, the optical fiber sub-assembly 230 is disposed on the top wall 211 or the bottom wall 212 of the fastening structure 210, and the telescopic structure 214 is disposed between the top wall 211 and the bottom wall 212 of the fastening structure 210. In this way, a height $L_1$ of the second cavity 240 (namely, the cavity length of the resonant cavity) may be changed by changing a height of the telescopic structure 214. In other words, the cavity length of the resonant cavity is changed. In this way, the resonant cavity packaging structure 200 may implement the function of the tunable filter, and a same resonant cavity packaging structure 200 may be used to filter out a plurality of optical signals of different wavelengths.

For example, the telescopic structure 214 may be a piezoelectric ceramic, where a first electrical pin 2141 is disposed on the piezoelectric ceramic, and the first electrical pin 2141 is configured to be electrically connected to a control circuit. The telescopic structure 214 is disposed as a piezoelectric ceramic. Because the piezoelectric ceramic has good frequency stability, high frequency accuracy, and a wide applicable frequency range, and the piezoelectric ceramic is small in volume, does not absorb moisture, has a long service life, and has good anti-interference performance, stability and anti-interference performance of the resonant cavity packaging structure 200 can be improved.

In some other embodiments, a material of the telescopic structure 214 may alternatively be a thermosensitive material. A size of the thermosensitive material varies with a temperature. For example, a higher temperature indicates a larger volume, or a lower temperature indicates a larger volume. In this way, a size of the telescopic structure 214 may be changed by changing the temperature, so that the height of the second cavity 240 is changed. In addition, the telescopic structure 214 may alternatively be a micro-electro-mechanical system or another telescopic mechanical structure, for example, a structure like a telescopic tube. A specific structure of the telescopic structure 214 is not specifically limited in embodiments of this application.

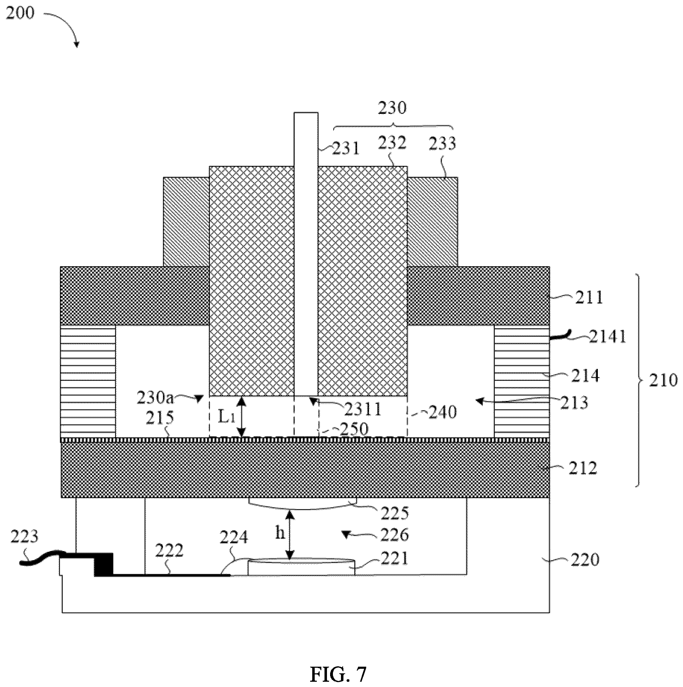

As shown in FIG. 7, in some embodiments, a high reflection coating 215 may be further disposed at the output end of the second cavity 240, namely, the bottom wall 212 of the fastening structure 210, where an orthographic projection that is of the high reflection coating 215 and that is in the center axis direction of the optical fiber 231 covers at least the optical fiber end face 2311, so that the second cavity 240 is formed between the high reflection coating 215 and the first end 230a of the optical fiber sub-assembly 230.

The high reflection coating 215 is disposed on the inner wall that is of the fastening structure 210 and that is opposite to the optical fiber end face 2311. Because the high reflection coating 215 has a high reflectivity, a reflectivity of the output end of the second cavity 240 can be improved.

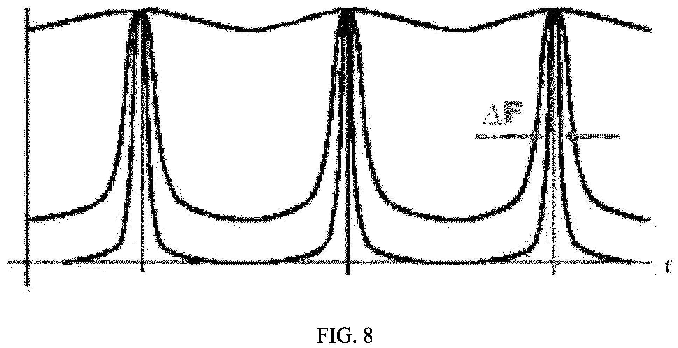

As shown in FIG. 8, a calculation formula of a frequency band width ΔF (3 dB bandwidth ΔF) corresponding to a value of a transmission coefficient that is reduced to half of a maximum value is as follows:

$$\Delta F = \frac{C\,(1-R)}{2\,\pi\,nL\,\sqrt{R}}$$

Herein, R is the reflectivity of the resonant cavity. It can be learned from the foregoing formula that a larger R indicates a narrower ΔF, and a larger fineness of the obtained optical signal.

For example, a value range of R may be any value in 0 to 1. In this embodiment of this application, a specific value of R is not specifically limited.

Therefore, in this embodiment, the high reflection coating 215 is disposed on the bottom wall 212 of the fastening structure 210, so that the reflectivity of the output end of the second cavity 240 can be improved, and a bandwidth of the optical signal emitted through the second cavity 240 can be reduced, so that the optical signal emitted through the second cavity 240 has higher fineness, that is, an error of the optical signal of the specific wavelength filtered out through the second cavity 240 is reduced.

For example, the high reflection coating 215 may cover the entire surface that faces the first cavity 213 and that is of the bottom wall 212 of the fastening structure 210. This facilitates processing. Certainly, in some embodiments, the high reflection coating 215 may alternatively be disposed only on a part that is of the bottom wall 212 and that is opposite to the first end 230a of the optical fiber sub-assembly 230, so that a part of the high reflection coating 215 can be saved. In addition, the high reflection coating 215 may alternatively be disposed on a part that is of the bottom wall 212 and that is opposite to the optical fiber end face 2311, namely, one end that is of the third cavity 250 and that is located on the bottom wall 212 of the fastening structure 210. A disposing range of the high reflection coating 215 is not specifically limited in embodiments of this application, and any technical solution of disposing the high reflection coating 215 falls within a protection scope of technical solutions of this application.

In some embodiments, the high reflection coating 215 may be fastened to the bottom wall 212 of the fastening structure 210 in a manner of bonding, coating, or the like. A connection manner between the high reflection coating 215 and the fastening structure 210 is not specifically limited in embodiments of this application.

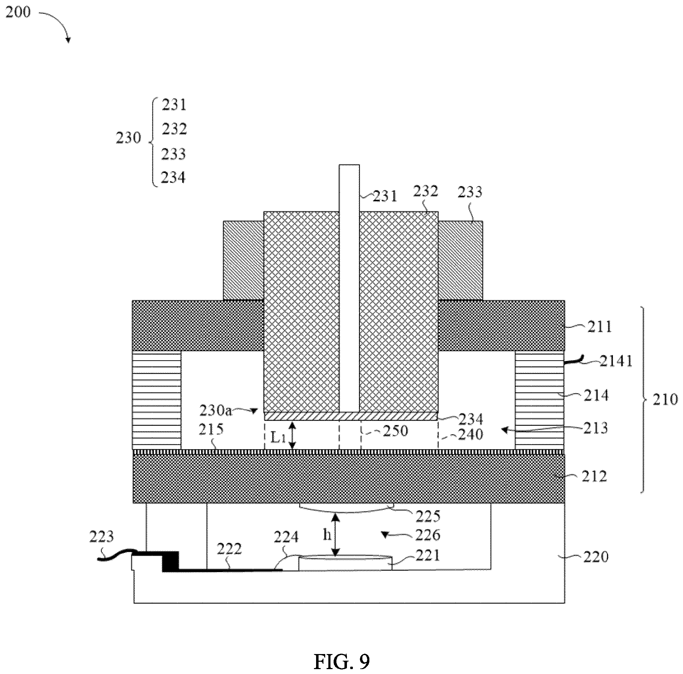

In a possible implementation, as shown in FIG. 9, a second lens 234 may be further disposed at the first end of the optical fiber end face 2311. The second cavity 240 is formed between the second lens 234 and the inner wall that is of the first cavity 213 and that is opposite to the second lens 234. The second lens 234 is configured to couple the optical signal emitted from the optical fiber 231. In this way, the optical signal emitted from the optical fiber end face 2311 may be coupled and then enters the second cavity 240. In this way, the optical signal emitted from the optical fiber end face 2311 may be resonated in narrower space. In this way, tolerances of the first lens 225 and the receiving apparatus 221 can be increased without increasing widths of the first lens 225 and the receiving apparatus 221. This can improve the optical power of the optical signal received by the receiving apparatus 221, and further improve efficiency of the resonant cavity packaging structure 200.

For example, the second lens 234 may be fixedly connected to the first end 230a of the optical fiber sub-assembly 230 in a manner of bonding or the like, and the second lens 234 at least completely covers the optical fiber end face 2311 of the optical fiber 231. In this way, the optical signal emitted from the optical fiber 231 can be coupled. It should be noted that a refractive index and another parameter of the second lens 234 are not specifically limited. These may be specifically limited in a specific case.

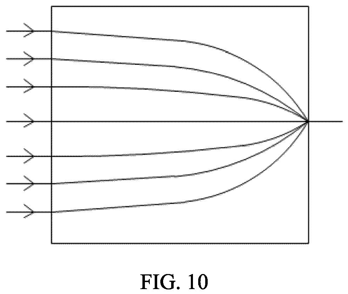

For example, the second lens 234 may be a self-focusing lens. As shown in FIG. 10, the self-focusing lens may enable the optical signal to be coupled in the self-focusing lens. In this way, an insertion loss generated when the optical signal is propagated in a medium can be reduced, to further improve efficiency of the optical signal received by the receiving apparatus 221. The second lens 234 is designed as the self-focusing lens, so that the insertion loss of the optical signal emitted from the optical fiber end face 2311 can be reduced, and further the efficiency of the resonant cavity packaging structure 200 can be improved. In addition, the second lens 234 is designed as the self-focusing lens, so that the height $L_1$ of the second cavity 240 can be further reduced, and further the volume of the resonant cavity packaging structure 200 can be reduced.

It should be noted that a value of the height $L_1$ of the second cavity 240 is at a micrometer level, and therefore, the height of the second cavity 240 is very small. The height shown in the figure does not indicate an actual height. Therefore, the structure in the figure does not limit the protection scope of embodiments of this application.

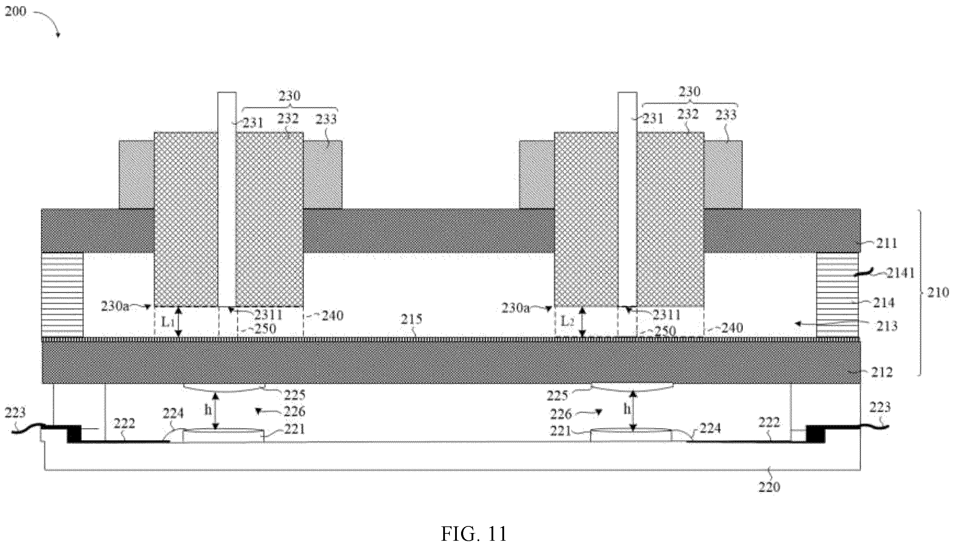

In an optional implementation, as shown in FIG. 11, there may be a plurality of optical fiber sub-assemblies 230 and a plurality of receiving apparatuses 221 (two optical fiber sub-assemblies 230 and two receiving apparatuses 221 are shown in the figure). One optical fiber sub-assembly 230 corresponds to one receiving apparatus 221. The plurality of optical fiber sub-assemblies 230 are disposed on a same side of the fastening structure 210 at intervals, and an optical fiber end face 2311 of each optical fiber sub-assembly 230 is located in the first cavity 213. A second cavity 240 is formed between a first end 230a of each optical fiber sub-assembly 230 and the inner wall that is of the first cavity 213 and that is opposite to the first end 230a of the optical fiber sub-assembly 230.

The plurality of optical fiber sub-assemblies 230 and the plurality of the receiving apparatus 221 are disposed, so that a plurality of second cavities 240 can be disposed in the fastening structure 210. In this way, the resonant cavity packaging structure 200 can simultaneously perform filtering on optical signals sent by the plurality of optical fiber sub-assemblies 230. This can improves the efficiency of the resonant cavity packaging structure 200 on a premise that the volume of the resonant cavity packaging structure 200 is not greatly affected. The optical fiber sub-assembly 230 may be the optical fiber sub-assembly 230 without the second lens 234, or may be the optical fiber sub-assembly 230 with the second lens 234; the high reflection coating 215 may be disposed on the bottom wall 212 of the fastening structure 210, or the high reflection coating 215 may not be disposed; and the first lens 225 may be disposed in the support member 220, or the first lens 225 may not be disposed. This may be specifically disposed in a specific case.

It should be noted that, heights $L_1$ and $L_2$ of different second cavities 240 located in a same resonant cavity packaging structure 200 are the same, so that the resonant cavity packaging structure 200 can filter out optical signals of a same specific wavelength. Certainly, when optical signals of different wavelengths need to be filtered out, the heights $L_1$ and $L_2$ of different second cavities 240 in a same resonant cavity packaging structure 200 may alternatively be set to different values. This may be specifically set in a specific case, and is not specifically limited in embodiments.

It should be noted that, when the plurality of optical fiber sub-assemblies 230 are disposed, the quantity of second electrical pins 223 on the support member 220 needs to correspond to a quantity of receiving apparatuses 221, so that an electrical signal of each receiving apparatus 221 can be led out.

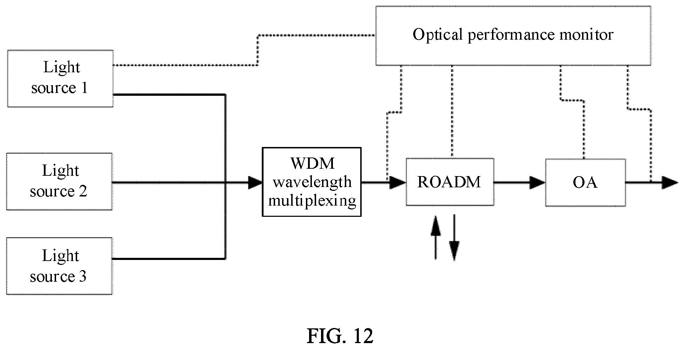

A second aspect of embodiments of this application provides an optical performance monitor, where the optical performance monitor may include the resonant cavity packaging structure 200 according to the first aspect. As shown in FIG. 12, in an application system of the optical performance monitor, the optical performance monitor may be configured to measure quality of an indicator like an optical power, a wavelength, or an OSNR of a WDM optical signal, and a measurement result is fed back to the system, to implement closed-loop monitoring. The optical performance monitor is configured to monitor the WDM, ROADM, and OA in the system.

According to the optical performance monitor in embodiments of this application, the resonant cavity packaging structure 200 according to the first aspect is disposed. Because the resonant cavity packaging structure 200 has a simple structure and a small volume, a volume of the optical performance monitor can be greatly reduced, and this is conducive to miniaturization development of an optical sub-assembly.

A third aspect of embodiments of this application provides a communication device, including at least the resonant cavity packaging structure 200 according to the first aspect or the optical performance monitor according to the second aspect. In the communication device in embodiments of this application, the resonant cavity packaging structure 200 according to the first aspect or the optical performance monitor according to the second aspect is disposed, so that the communication device can have a function of monitoring quality of an indicator like an optical power, a wavelength, or an optical signal noise ratio (Optical Signal Noise Ratio, OSNR) of an optical signal, a volume of the communication device can be further reduced, and integration of the communication device can be further improved. This is conducive to miniaturization development of the communication device.

In some embodiments, the communication device may be a board or a wavelength division network device. For example, the wavelength division network device may be an optical transport network (Optical Transimmision Network, OTN) device, and the OTN device may be a dense wavelength division multiplexing (Dense Wavelength Division Multiplexing, DWDM) device, an optical add/drop multiplexer (opticaladd-dropmultiplexer, OADM), an optical crossconnect switch, an optical amplifier device, or an optical control device.

In descriptions of embodiments of this application, it should be noted that, unless otherwise explicitly stipulated and restricted, terms "mounting", "joint connection", and "connection" should be understood broadly, which, for example, may be a fixed connection, or may be an indirect connection by using a medium, or may be an internal communication between two components, or may be an interactive relationship between two components. A person of ordinary skill in the art may understand specific meanings of the foregoing terms in embodiments of this application in specific cases.

In the specification, claims, and accompanying drawings of embodiments of this application, terms "first", "second", "third", "fourth", and so on (if they exist) are intended to distinguish between similar objects but do not necessarily indicate a specific order or sequence.

**Claims**

1. A resonant cavity packaging structure, comprising:
an optical fiber sub-assembly (230), a fastening structure (210), and a support member (220), wherein the optical fiber sub-assembly (230) and the support member (220) are disposed oppositely at two ends of the fastening structure (210);

a first cavity (213) is provided in the fastening structure (210), an optical fiber (231) is disposed in the optical fiber sub-assembly (230), the optical fiber sub-assembly (230) penetrates into the fastening structure (210), and an optical fiber end face (2311) of the optical fiber (231) is located in the first cavity (213);

an end that is of the optical fiber sub-assembly (230) and on which the optical fiber end face (2311) is disposed is a first end of the optical fiber sub-assembly (230), a second cavity (240) is formed between the first end of the optical fiber sub-assembly (230) and an inner wall that is of the first cavity (213) and that is opposite to the first end of the optical fiber sub-assembly (230), and the second cavity (240) is used to provide resonance space for an optical signal emitted by the optical fiber (231); and

a receiving apparatus (221) is disposed in the support member (220), the receiving apparatus (221) corresponds to the second cavity (240), and the receiving apparatus (221) is configured to receive an optical signal emitted from the fastening structure (210) through the second cavity (240).

2. The resonant cavity packaging structure according to claim 1, wherein a high reflection coating (215) is disposed on an inner wall that is of the fastening structure (210) and that is opposite to the optical fiber end face (2311);

an orthographic projection that is of the high reflection coating (215) and that is in a center axis direction of the optical fiber (231) covers at least the optical fiber end face (2311); and

the second cavity (240) is formed between the first end of the optical fiber sub-assembly (230) and the high reflection coating (215).

3. The resonant cavity packaging structure according to claim 1 or 2, wherein a first lens (225) is disposed on a surface that is of the fastening structure (210) and that faces the support member (220);

the first lens (225) corresponds to the second cavity (240);

the receiving apparatus (221) is disposed opposite to a surface that is of the first lens (225) and that is away from the fastening structure (210); and

the first lens (225) is configured to: couple the optical signal output from the fastening structure (210) through the second cavity (240) and then emit the coupled optical signal into the receiving apparatus (221).

4. The resonant cavity packaging structure according to claim 3, wherein an incident position is disposed on a surface that is of the receiving apparatus (221) and that faces the first lens (225); and

the optical signal coupled through the first lens (225) is emitted into the receiving apparatus (221) from the incident position.

5. The resonant cavity packaging structure according to claim 4, wherein there is a gap (226) between the first lens (225) and the receiving apparatus (221), and the gap (226) is used to provide coupling space for the optical signal passing through the first lens (225).

6. The resonant cavity packaging structure according to any one of claims 1 to 5, wherein a second lens (234) is disposed on the optical fiber end face (2311);

the second cavity (240) is formed between the second lens (234) and the inner wall that is of the first cavity (213) and that is opposite to the second lens (234); and

the second lens (234) is configured to couple the optical signal emitted from the optical fiber (231).

7. The resonant cavity packaging structure according to claim 6, wherein the second lens (234) is a self-focusing lens.

8. The resonant cavity packaging structure according to any one of claims 1 to 7, wherein the fastening structure (210) comprises a top wall (211), a bottom wall (212), and a telescopic structure (214);

the top wall (211) and the bottom wall (212) are disposed opposite to each other, and the telescopic structure (214) is enclosed between the top wall (211) and the bottom wall (212), so that the first cavity (213) is formed among the top wall (211), the bottom wall (212), and the telescopic structure (214);

the optical fiber sub-assembly (230) is disposed on the top wall (211) or the bottom wall (212) of the fastening structure (210); and

the telescopic structure (214) is configured to change a distance between the top wall (211) and the bottom wall (212), so that lengths of the first cavity (213) and the second cavity (240) in a direction from the top wall (211) to the bottom wall (212) are variable.

9. The resonant cavity packaging structure according to claim 8, wherein the telescopic structure (214) is a piezoelectric ceramic; and

a first electrical pin (2141) is disposed on the piezoelectric ceramic, and the first electrical pin (2141) is configured to be electrically connected to a control circuit.

10. The resonant cavity packaging structure according to claim 8, wherein a material of the telescopic structure (214) is a thermosensitive material; and a size of the thermosensitive material varies with a temperature.

11. The resonant cavity packaging structure according to any one of claims 1 to 10, wherein there are a plurality of optical fiber sub-assemblies (230) and a plurality of receiving apparatuses (221);

one optical fiber sub-assembly (230) corresponds to one receiving apparatus (221); the plurality of optical fiber sub-assemblies (230) are disposed on a same side of the fastening structure (210) at intervals, and an optical fiber end face (2311) of each optical fiber sub-assembly (230) is located in the first cavity (213); and one second cavity (240) is formed between a first end of each optical fiber sub-assembly (230) and the inner wall that is of the first cavity and that is opposite to the first end of the optical fiber sub-assembly (230).

12. The resonant cavity packaging structure according to any one of claims 1 to 11, wherein at least one second electrical pin (223) is disposed on an outer side of the support member (220); and each receiving apparatus (221) corresponds to at least one second electrical pin (223), a part of second electrical pins (223) is configured to be grounded, and a part of the second electrical pins (223) is electrically connected to the receiving apparatus (221).

13. The resonant cavity packaging structure according to claim 12, wherein an internal line (222) is disposed on the support member (220), and the internal line (222) is configured to electrically connect the second electrical pin (223) and the receiving apparatus (221).

14. The resonant cavity packaging structure according to claim 13, wherein one end of the internal line (222) is electrically connected to the second electrical pin (223), and the other end of the internal line (222) is electrically connected to the receiving apparatus (221) through a connecting line (224).

15. The resonant cavity packaging structure according to claim 14, wherein the connecting line (224) is a metal line.

16. The resonant cavity packaging structure according to any one of claims 12 to 15, wherein the second electrical pin (223) is a flexible circuit board or a metal pin.

17. The resonant cavity packaging structure according to any one of claims 1 to 16, wherein a material of the support member (220) is ceramic.

18. The resonant cavity packaging structure according to any one of claims 1 to 17, wherein the receiving apparatus (221) is a photoelectric diode.

19. The resonant cavity packaging structure according to any one of claims 1 to 18, wherein at least one optical fiber (231) is disposed in the optical fiber sub-assembly (230).

20. The resonant cavity packaging structure according to claim 19, wherein the optical fiber sub-assembly (230) further comprises a ferrule (232) and an outer tube (233);

the ferrule (232) encloses an outer side of the optical fiber (231), the outer tube (233) encloses an outer side of the ferrule (232), and both a first end of the ferrule (232) and the optical fiber end face (2311) are located in the first cavity (213); and the outer tube (233) is located on an outer side of the fastening structure (210), and is fixedly connected to the fastening structure (210).

21. An optical performance monitor, comprising at least the resonant cavity packaging structure according to any one of claims 1 to 20.

22. A communication device, comprising at least the optical performance monitor according to claim 21, or comprising at least the resonant cavity packaging structure according to any one of claims 1 to 20.

FIG. 1

FIG. 2

FIG. 3A

FIG. 3B

FIG. 4

FIG. 5

FIG. 6

FIG. 7

FIG. 8

FIG. 9

FIG. 10

FIG. 11

EP 4 518 191 A1

FIG. 12

| INTERNATIONAL SEARCH REPORT | International application No. |
|---|---|
| | **PCT/CN2023/078492** |

**A. CLASSIFICATION OF SUBJECT MATTER**

H04B 10/07(2013.01)i;H01S 3/08(2023.01)i

According to International Patent Classification (IPC) or to both national classification and IPC

**B. FIELDS SEARCHED**

Minimum documentation searched (classification system followed by classification symbols)

IPC: H04B，H01S

Documentation searched other than minimum documentation to the extent that such documents are included in the fields searched

Electronic data base consulted during the international search (name of data base and, where practicable, search terms used)

CNABS, CNTXT, CNKI, VEN, ENTXTC, WOTXT, EPTXT, USTXT, IEEE: 光, 谐振, 腔, 空间, 光纤, 封装, 体积, 尺寸, 小, 信号, optical, light, cavity, space, fiber, packag+, volume+, size, small, mini+, signal

**C. DOCUMENTS CONSIDERED TO BE RELEVANT**

| Category* | Citation of document, with indication, where appropriate, of the relevant passages | Relevant to claim No. |
|---|---|---|
| A | CN 106672887 A (WUHAN UNIVERSITY OF TECHNOLOGY) 17 May 2017 (2017-05-17) entire document | 1-22 |
| A | CN 104776841 A (ZHEJIANG UNIVERSITY) 15 July 2015 (2015-07-15) entire document | 1-22 |
| A | CN 106549295 A (XIAMEN UNIVERSITY) 29 March 2017 (2017-03-29) entire document | 1-22 |
| A | CN 104981722 A (BEIHANG UNIVERSITY) 14 October 2015 (2015-10-14) entire document | 1-22 |
| A | US 7255487 B1 (CHOI YOUNGMIN A) 14 August 2007 (2007-08-14) entire document | 1-22 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 May 2023** | **26 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078492**

| Patent document cited in search report | | | Publication date (day/month/year) | Patent family member(s) | | | Publication date (day/month/year) |
|---|---|---|---|---|---|---|---|
| CN | 106672887 | A | 17 May 2017 | None | | | |
| CN | 104776841 | A | 15 July 2015 | None | | | |
| CN | 106549295 | A | 29 March 2017 | None | | | |
| CN | 104981722 | A | 14 October 2015 | US | 2018031769 | A1 | 01 February 2018 |
| | | | | US | 9915786 | B2 | 13 March 2018 |
| | | | | WO | 2016169023 | A1 | 27 October 2016 |
| US | 7255487 | B1 | 14 August 2007 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210608273